# EUROPÄISCHE PATENTSCHRIFT

(11) **EP 0 794 443 B1**
(45) Veröffentlichungstag und Bekanntmachung des Hinweises auf die Patenterteilung: **08.05.2002**
(21) Anmeldenummer: 97102641.4
(22) Anmeldetag: 19.02.1997
(51) Int. Cl.: G02B 6/124, G02B 6/134, G02B 6/293

(54) **Verfahren zur Herstellung integriert optischer Bauteile durch Ionenaustausch mit Gittermaske für Schichtwellenleiter**
Process for fabrication of integrated optical elements by ion exchange with grating mask for planar optical waveguide
Procédé de fabrication des éléments optiques intégrés par échange d'ions avec un masque de réseau pour un guide d'onde plan

(30) Priorität: 09.03.1996 DE 19609289
(43) Veröffentlichungstag der Anmeldung: 10.09.1997
(73) Patentinhaber: IOT Integrierte Optik GmbH & Co. KG, 68753 Waghäusel-Kirrlach (DE)
(72) Erfinder: Fabricius, Norbert, Dr., 68766 Hockenheim (DE); Foss, Wolfgang, 76709 Kronau (DE); Hollenbach, Uwe, 76703 Kraichtal (DE); Wolff, Martin, 76726 Germersheim (DE); Seiberth, Uwe, 68794 Oberhausen (DE)
(74) Vertreter: Müller-Rissmann, Werner Albrecht, Dr.

(56) Entgegenhaltungen:
- WO-A-95/13553
- TERVONEN A: "Glass waveguide WDM devices: design and analysis" FUNCTIONAL PHOTONIC AND FIBER DEVICES, SAN JOSE, CA, USA, 30 JAN.-1 FEB. 1996, Bd. 2695, Seiten 80-91, XP002083611 ISSN 0277-786X, Proceedings of the SPIE - The International Society for Optical Engineering, 1996, SPIE-Int. Soc. Opt. Eng, USA
- RAMASWAMY R V ET AL: "ION-EXCHANGED GLASS WAVEGUIDES: A REVIEW" JOURNAL OF LIGHTWAVE TECHNOLOGY, Bd. 6, Nr. 6, Juni 1988, Seiten 984-1002, XP000049599

## Beschreibung

Die Erfindung betrifft gemäß dem Oberbegriff des Anspruches 1 ein Verfahren zur Herstellung integriert optischer Bauelemente mit Streifenwellenleitern und einem Schichtwellenleiter durch Ionenaustausch.

Ein integriert optischer Sternkoppler mit ionenausgetauschten Streifenwellenleitern und einem ionenausgetauschten Schichtwellenleiter, in den die Streifenwellenleiter übergehen, ist aus Tervonen, A. Proc. SPIE 2695 (1996), p. 80 - 91 bekannt.

Integriert optische Bauteile dieser Art und ihre Herstellung sind besonders als Sternkoppler in Zusammenhang mit Angereihte-Wellenleiter-Gittern, kurz AWG, englisch Arrayed Waveguide Gratings, z.B. zum Aufbau von Multiplexern und Demultiplexern bekannt.

Beispiele dafür sind US 5,412,744 und US 5,414,548. Die US 5,412,744 wie auch die US 5,136,671 bezeichnen den zwischen den Streifenwellenleitern angeordneten Schichtwellenleiter als Freiraum (free space region). Die Begriffe Schichtwellenleiter und Freiraum werden im weiteren Synonym verwendet.

Die Herstellung integriert optischer Bauelemente mit vergrabenen Wellenleitern in Glas durch Ionenaustausch mit einer Maske ist z.B. aus WO 95/13553 bekannt. Dort ist auch die Herstellung eines Übergangs zwischen zwei verschieden tief vergrabenen Wellenleiters mittels einer diagonal angeschnittenen, den Wellenleiter nur teilweise freigebenden, Maske beschrieben.

Es besteht das Problem, daß bei Verwendung einer Maske, die den gewünschten Freiraum mit einem ausgedehnten Schichtwellenleiter einfach als Freiraum wiedergibt, das Brechzahlprofil in diesem Bereich tiefer wird als bei den schmalen Streifenwellenleitern, die daran anschließen. Dies ist wegen hoher Dämpfung nicht brauchbar.

Aufgabe der Erfindung ist die Bereitstellung eines Herstellverfahrens für integriert optische Bauelemente mit vergrabenen Wellenleitern, bei denen Streifenwellenleiter und ein als Schichtwellenleiter ausgebildeter Freiraum verlustarm zusammenwirken.

Das wird gemäß Anspruch 1 dadurch erreicht, daß Ionenaustausch mit einer Maske erfolgt, die im Bereich des Freiraums eine Streifen- oder Gitterstruktur aufweist.

Damit wird das Kennzeichnen eines Sternkopplers erreicht, nach dem das Tiefenprofil des Schichtwellenleiters im wesentlichen gleich ist dem Tiefenprofil der Streifenwellenleiter und höchstens die 1,2-fache Tiefe erreicht.

Es wurde erkannt, daß aufgrund der seitwärtigen Wanderung der Ionen, die zu der bekannten Verbreiterung und Unschärfe der Streifenwellenleiter im Vergleich zu den Masken führt, die Tiefenwanderung bei schmalen Strukturen verlangsamt ist. Andererseits ergibt diese Verbreiterung die Möglichkeit, daß dicht nebeneinanderliegende Strukturen verschmelzen. Dies wird nun mit der Gittermaske zur Herstellung einer gleichmäßigen, nicht stärker vertieften breiten Struktur ausgenutzt.

Bevorzugte Ausführungen sind Gegenstand der Unteransprüche. Als Strukturmaterial ist Glas bevorzugt.

Bevorzugt findet die Erfindung nach Anspruch 4 Anwendung bei Anordnungen bei denen die Breite der Maskenöffnungen der Streifenwellenleiter unter 3, vorzugsweise bei 1,5 bis 2,1 Mikrometern liegt Bei wesentlich breiteren Maskenöffnungen tritt der Verbreiterungseffekt und die daraus folgende Verlangsamung der Tiefenwanderung als Randeffekt zurück, im Freiraum (Schichtwellenleiter) sind dann die Verhältnisse nicht mehr so stark verschieden.

Die schmalen Strukturen im angegebenen Breitenbereich sind aber für eine hohe Integration der integriert optischen Bauelemente bevorzugt und ergeben auch geeignete Moden der Wellenleitung.

Anspruch 5 gibt ein Maß für die Größe des Schichtwellenleiters. Zwischen die Enden der Maskenöffnungen der Streifenwellenleiter paßt demnach mindestens ein Kreis mit einem Durchmesser von mehr als dem Vierfachen der Breite der Maskenöffnungen. Damit ist ein deutlicher Unterschied zu einem adiabatischen 2 x 2-Koppler, etwa nach DE 43 31 611 gegeben. Normalerweise ist der Kreisdurchmesser um ein bis drei Größenordnungen größer als die Breite der Maskenöffnungen.

Anspruch 6 gibt die bevorzugte Verwendung des Verfahrens bei der Herstellung von Multiplexer/Demultiplexer-Einheiten mit AWG (Arrayed Waveguide Grating), die Sternkoppler mit Freiräumen aufweisen, an. Hier besteht ein konkreter Bedarf für dieses Verfahren.

Die Ansprüche 7 und 8 betreffen die Ausführung der Gittermaske im Bereich des Freiraumes (Schichtwellenleiter). Am besten wird die gleiche Breite der Maskenöffnungen wie im Bereich des Streifenwellenleiters verwendet. Dies ist leicht herstellbar und gibt das bestangepaßte Ionenaustauschverhalten. Abweichende Breiten der Maskenöffnungen sind aber auch brauchbar. Der Mittenabstand der Maskenöffnungen beträgt das Zwei- bis etwa das Achtfache der Breite der Öffnungen. Darunter ist der Unterschied zur Maske mit einfachem Freiraum zu gering, darüber wird der untere Grenzbereich des Schichtwellenleiters wieder wellig strukturiert, wobei die Breite der Maskenöffnungen eine Rolle spielt. Am besten ist der Bereich vom sechs- bis siebenfachen. Die Richtung der Gitterlinien ist nicht notwendig auf die Geometrie der angeschlossenen Stegwellenleiter ausgerichtet. Die gezielte Ausnutzung dieser Richtung und der Restwelligkeit im unteren Grenzbereich und an den seitlichen Rändern und Übergängen zu den Streifenwellenleitern eröffnet jedoch Möglichkeiten für Feinabstimmungen.

Näher erläutert wird die Erfindung anhand der Zeichnung.
- Figur 1: zeigt schematisch in Aufsicht Maske und Wellenleiter eines N x M-Sternkopplers mit Freiraum gemäß der Erfindung;
- Figur 2a: zeigt im Querschnitt dasselbe im Bereich eines Eingangswellenleiters;
- Figur 2b: zeigt im Querschnitt dasselbe im Bereich des Freiraums;
- Figur 2c: zeigt im Vergleich dasselbe wie Figur 2b bei in diesem Bereich unstrukturierter Maske;
- Figur 3: zeigt einen N x M-Sternkoppler mit Angereihte-Wellenleiter-Gitter und erfindungsgemäß hergestellten Freiräumen.

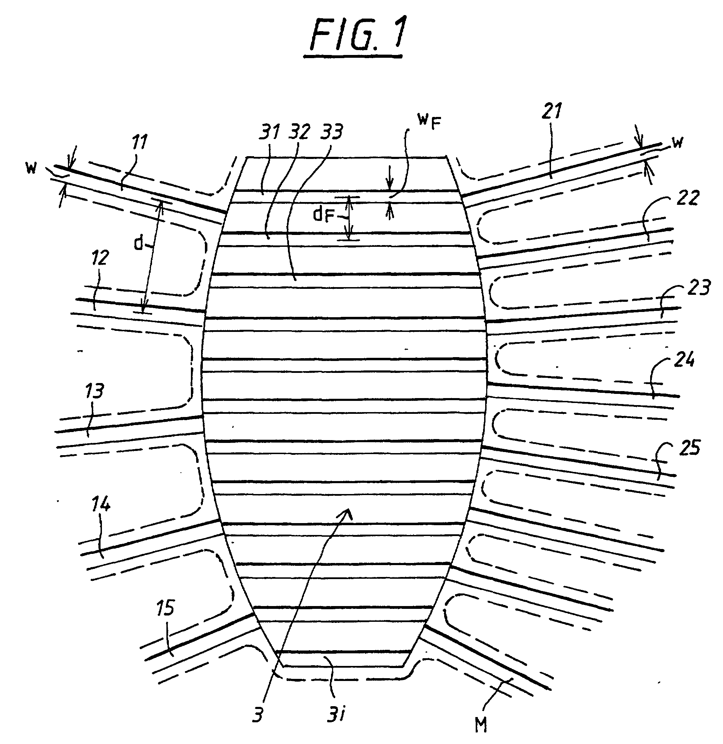

In Figur 1 ist mit durchgezogenen Linien die Struktur einer Maske gezeigt, wie sie zum Ionenaustauschprozeß auf dem Substrat angeordnet ist. Sie besteht aus einer aufgedampften und photolithographisch strukturierten Metallschicht (Chrom). Es ist ein qualitatives Beispiel dargestellt, um die wichtigen Eigenschaften zu zeigen. Links ist eine Anzahl N = 5 an Eingangswellenleitern 11, 12, 13, 14, 15 vorgesehen. Die freie Stegbreite w beträgt typisch 1,5 bis 1,6 µm.

Die rechts abgehenden M Stück Ausgangswellenleiter 21, 22 ... 2M haben im Beispiel die gleiche stegbreite w der Maske. Diese Ausgangswellenleiter können beispielsweise die Elemente eines Angereihte-Wellenleiter-Gitters AWG sein. Der Abstand der Ausgängswellenleiter (21, ..., 2M) beträgt typischerweise d = 20 - 25 µm.

Zwischen Eingangs- (11-15) und Ausgangswellenleitern (21, ..., 2M) erfolgt die Verbindung durch einen Freiraum 3, der auf der Maske als ein Muster paralleler Streifen 31, 32, ..., 3i ausgebildet ist. Die Stegbreite w_{F} der Streifen 31-3i ist gleich der Stegbreite w der Eingangs- und Ausgangswellenleiter (11-15; 21-2M). Der Mittenabstand d - die Periode - der Streifen 31-3i liegt bei 8 bis 12 µm bei w_{F} = 1,5 µm, bevorzugt oberhalb 9 µm. Das ist das Fünf- bis Achtfache der Stegbreite w_{F}. Bei einem Mittenabstand von 15 µm zeigt sich eine deutlich wellige, die einzelnen Streifen wiedergebende Struktur des erzeugten Wellenleiter-Brechzahlprofils.

Die mit dieser Maske durch Ionenaustausch in Glas erzeugte Wellenleiter-Struktur ist gestrichelt dargestellt. Die Wellenleiter haben ein stetig variierendes Brechzahlprofil, entsprechend der Dichte der eindiffundierten Ionen.

Die gestrichelte Linie repräsentiert die größte Halbwertsbreite des Brechzahlprofils. Im Bereich des Freiraums ergibt sich aufgrund des gezeigten Mittenabstands der Streifen 31-3i ein Schichtwellenleiter. Es ist daher auch ohne weiteres möglich, daß die Streifen der Maske im Bereich des Freiraums 3 beliebig, z.B. um 90°, gedreht sind.

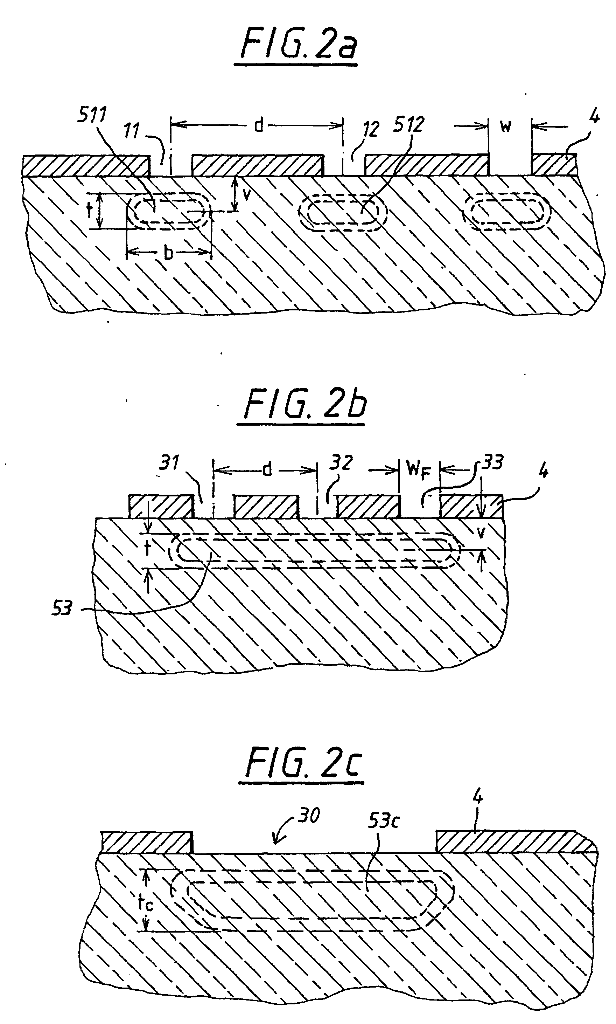

Die Querschnittsdarstellungen der Figuren 2a-c verdeutlichen den Zusammenhang von Maske 4 und erzeugtem Wellenleiter im Glassubstrat 5. Die Darstellungen zeigen qualitativ den Zustand nach erfolgtem Ionenaustausch, vor Entfernen der Maske 4.

Figur 2a zeigt einen Querschnitt im Bereich der Eingangswellenleiter 11 und 12. Die Maske 4 hat freie Stege 11, 12 der Breite w. Diesen entsprechen Wellenleiter, d.h. Bereiche hoher Konzentration des ausgetauschten Ions, 511, 512, im Substrat 5. Diese sind gestrichelt eingezeichnet, wie in Figur 1.

Der Mittenabstand d der Stege 11, 12 ist groß gegen deren Breite w. Die Wellenleiter 511, 512 sind deutlich getrennt. Sie haben eine Breite b und eine Tiefe t von ca. b = 10 µm und t = 8 µm. Die Vergrabungstiefe v beträgt ca. v = 18 µm. Im Bereich des Freiraums 3 zeigt Figur 2b die Situation, die Streifen 31, 32, 33 haben bei gleicher Breite w_{F} = w wie oben einen deutlich geringeren Mittenabstand d_{F}, dieser ist nur noch etwa so groß wie die Breite b eines Wellenleiters 511, 512 der Figur 2a. Es entsteht daher beim Ionenaustausch ein gleichmäßiger Schichtwellenleiter 53 im Substrat, der den gesamten Freiraum 3 ausfüllt. Seine Tiefe t_{F} im Verhältnis zu Tiefe t des einzelnen Wellenleiters wird durch den Mittenabstand d_{F} der Streifen 31, 32, 33 gesteuert und kann dieser gleich gemacht werden: t_{F} = t. Dies ist optimal für das verlustarme Koppeln vom Eingangswellenleiter in den Freiraum und weiter in die Ausgangswellenleiter.

Dagegen zeigt Figur 2c das Ergebnis, wenn statt der gestreiften Maske gemäß der Erfindung für den Freiraum 3 einfach ein Freiraum 30 auf der Maske 4 vorgesehen wird: Im Substrat 5 entsteht ein Schichtwellenleiter 53c, dessen Tiefenprofil eine deutlich höhere Tiefe t_{C} aufweist. Damit entsteht an den Übergängen zu den Eingangs- und Ausgangswellenleitern (11-15; 21-2M) eine deutliche Stufe mit entsprechenden Verlusten.

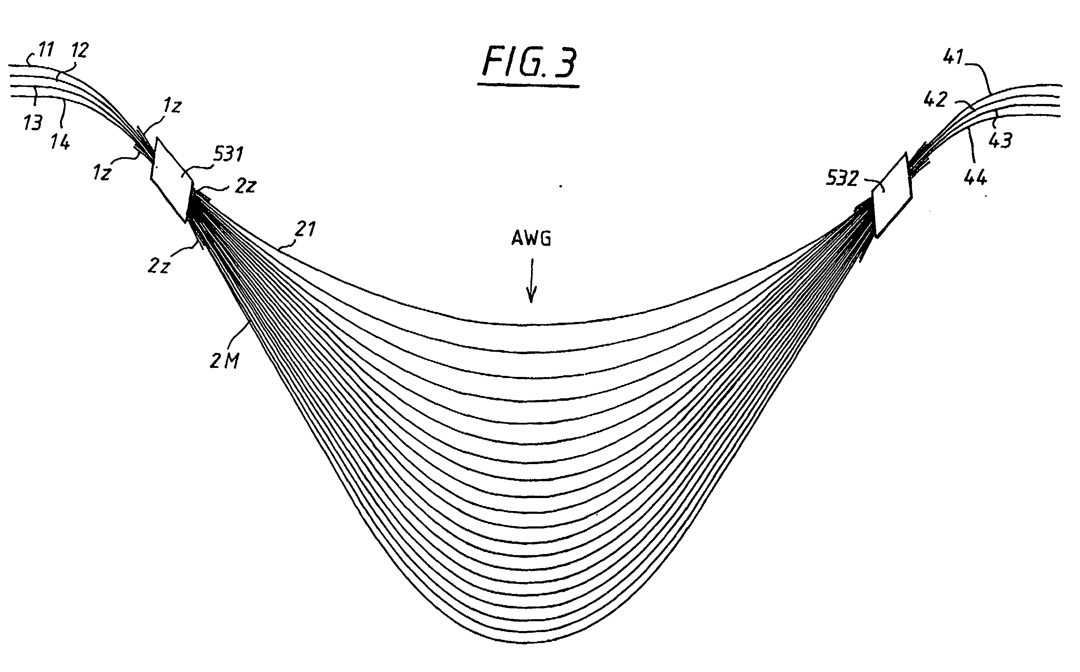

Figur 3 zeigt einen 4 x 4 Multiplexer mit zwei Sternkopplern mit Freiräumen 531 und 532 und dazwischenliegendem Angereihte-Wellenleiter-Gitter AWG, wie er im Prinzip bekannt ist, z.B. aus den bereits zitierten US 5,412,744 und US 5,414,548. Neu ist das oben beschriebene Herstellverfahren und die damit erreichte Eigenschaft, daß die Schichtwellenleiter in den Bereichen der Freiräume 531 und 532 die gleiche Tiefe und Dicke aufweisen wie die Ein- und Ausgangswellenleiter 11 bis 14, 21 bis 2M und 41 bis 44.

Dargestellt sind auch zusätzliche stumpf endende Wellenleiter 1z und 2z jeweils neben den Wellenleitern 11 bis 14 und 21 bis 2M angeordnet. Diese dienen dazu, bei den jeweils äußersten Wellenleitern 11, 14 und 21, 2M Randeffekte zu vermeiden. Die Darstellung ist quer gespreizt.

**Tabelle 1**

| **Designdaten Multiplexer** | |
|---|---|
| Anzahl der Ein- (11 - 14)/ Ausgänge (41 - 44) | je 4 |
| Anzahl der angereihten Wellenleiter (21 - 2M) des Gitters | 10 (noch besser 20) |
| Maskenbreite dafür | w = 1,5 - 1,6 µm |
| Breite der einzelnen Wellenleiter | b ≈ 10 µm |
| Tiefe der einzelnen Wellenleiter | t ≈ 8 µm |
| Vergrabungstiefe | v ≈ 18 µm |
| Radius der Freiraumzone | 2370,2 µm |
| Mittenabstand der Streifen der Maske für den Freiraum | d_{F} = 9 µm |
| Tiefe der Freiraumzone | t_{F} ≈ 8 µm |
| Längendifferenz benachbarter, angereihter Wellenleiter | 127,4 µm |
| Mittenwellenlänge λ₀ | 1,552 µm |
| Kanalabstand | 3,2 nm |

## Patentansprüche

1. Verfahren zur Herstellung integriert optischer Bauelemente mit Streifenwellenleitern (11-15; 21-2M) und einem Schichtwellenleiter (53) durch Ionenaustausch, **dadurch gekennzeichnet, daß** eine Maske (4) mit Gitterstruktur (3i) zur Erzeugung des Schichtwellenleiters (53) dient und diese Maske (4) zugleich zur Erzeugung der Streifenwellenleiter (11-15; 21-2M) dient.

2. Verfahren zur Herstellung integriert optischer Bauelemente nach Anspruch 1 mit mindestens vier Streifenwellenleitern (11-15, 21-2M), die in den Schichtwellenleiter (53) münden.

3. Verfahren nach Anspruch 1 oder 2, **gekennzeichnet durch** das Substratmaterial Glas.

4. Verfahren nach Anspruch 1, 2 oder 3, **dadurch gekennzeichnet, daß** die Breite (w) der Maskenöffnungen der Streifenwellenleiter (11-15, 21-2M) unter 3, vorzugsweise bei 1,5 bis 2,1 Mikrometern liegt.

5. Verfahren nach einem der Ansprüche 1-4, **dadurch gekennzeichnet, daß** zwischen die Enden der Maskenöffnungen mindestens ein Kreis mit einem Durchmesser von mehr als dem Vierfachen der Breite (w) der Maskenöffnungen paßt

6. Verfahren nach einem der Ansprüche 1 - 5, **gekennzeichnet durch** die Ausbildung des Bauteils als Multiplexer/Demultiplexer mit Angereihter Wellenleiter-Gitter und Sternkopplern mit Schichtwellenleitern (531, 532).

7. Verfahren nach einem der Ansprüche 1 - 6, **dadurch gekennzeichnet, daß** die Streifen- oder Gitterstruktur der Maske (4) im Bereich des Schichtwellenleiters (3) die gleiche oder höchstens die 1,5-fache Breite (w_{F}) der Maskenöffnungen wie im Bereich der Streifenwellenleiter aufweist.

8. Verfahren nach einem der Ansprüche 1 - 7, **dadurch gekennzeichnet, daß** die Streifen- oder Gitterstruktur (3i) der Maske (4) im Bereich des Schichtwellenleiters (3) einen Mitten-Abstand (d_{F}) der Maskenöffnungen (3i) vom Zwei - bis Achtfachen der Breite der Maskenöffnungen aufweisen, vorzugsweise vom Sechs- bis Siebenfachen.

## Claims

1. Method for fabricating integrated optical devices with strip waveguides (11-15; 21-2M) and a planar waveguide (53) by ion exchange, **characterized in that** a mask (4) with a grating structure (3i) serves for producing the planar waveguide (53) and the said mask (4) simultaneously serves for producing the strip waveguides (11-15; 21-2M).

2. Method for fabricating integrated optical devices according to Claim 1 with at least four strip waveguides (11-15, 21-2M) which lead into the planar waveguide (53).

3. Method according to Claim 1 or 2, **characterized by** the substrate material glass.

4. Method according to Claim 1, 2 or 3, **characterized in that** the width (w) of the mask openings of the strip waveguides (11-15, 21-2M) is less than 3 micrometers, and is preferably 1.5 to 2.1 micrometers.

5. Method according to one of Claims 1-4, **characterized in that** at least one circle having a diameter of more than four times the width (w) of the mask openings fits between the ends of the mask openings.

6. Method according to one of Claims 1-5, **characterized by** the design of the device as a multiplexer/demultiplexer with array waveguide grating and star couplers with planar waveguides (531, 532).

7. Method according to one of Claims 1-6, **characterized in that** the. strip or grating structure of the mask (4) in the region of the planar waveguide (3) has the same width (w_{F}) of the mask openings as in the region of the strip waveguides or at most 1.5 times the said width.

8. Method according to one of Claims 1-7, **characterized in that** the strip or grating structure (3i) of the mask (4) in the region of the planar waveguide (3) has a centre distance (d_{F}) between the mask openings (3i) of two to eight times the width of the mask openings, preferably six to seven times.

## Revendications

1. Procédé de fabrication d'éléments optiques intégrés avec des guides d'ondes en bande (11-15 ; 21-2M) et un guide d'ondes en couché (53) par échange ionique, **caractérisé en ce qu'**un masque (4) ayant une structure en grille (3i) sert à produire le guide d'ondes en couche (53) et ce masque (4) sert en même temps à produire le guide d'ondes en bande (11-15 ; 21-2M).

2. Procédé de fabrication d'éléments optiques intégrés selon la revendication 1 avec au moins quatre guides d'ondes en bande (11-15 ; 21-2M) qui débouchent dans le guide d'ondes en couche (53).

3. Procédé selon la revendication 1 ou 2, **caractérisé par** le matériau du substrat qui est du verre.

4. Procédé selon la revendication 1, 2 ou 3, **caractérisé en ce que** la largeur (w) des orifices du masque du guide d'ondes en bande (11-15 ; 21-2M) est inférieure à 3 micromètres, de préférence comprise entre 1,5 et 2,1 micromètres.

5. Procédé selon l'une des revendications 1 à 4, **caractérisé en ce qu'**au moins un cercle ayant un diamètre supérieur au quadruple de la largeur (w) des orifices du masque peut tenir entre les extrémités des orifices du masque.

6. Procédé selon l'une des revendications 1 à 5, **caractérisé par** la configuration du composant sous la forme d'un multiplexeur/démultiplexeur avec une grille de guides d'ondes en réseau et des coupleurs en étoile avec guides d'ondes en couche (531, 532).

7. Procédé selon l'une des revendications 1 à 6, **caractérisé en ce que** la structure en bande ou en grille du masque (4) présente dans là zone du guide d'ondes en couche (3) la même largeur ou au maximum 1,5 fois la largeur (w_{F}) des orifices du masque, comme dans la zone du guide d'ondes en bande.

8. Procédé selon l'une des revendications 1 à 7, **caractérisé en ce que** la structure en bande ou en grille (3i) du masque (4) présente dans la zone du guide d'ondes en couche (3) un écart (d_{F}) entre les centres des orifices du masque (3i) qui est deux à huit fois supérieur à la largeur des orifices du masqúe, de préférence de six à sept fois supérieur.
